# EUROPEAN PATENT APPLICATION

(11) **EP 4 166 033 A1**
(43) Date of publication of application: **19.04.2023**
(21) Application number: 21849853.3
(22) Date of filing: 16.06.2021
(51) Int. Cl.: A45C 11/00, C09D 5/16, C09D 7/61, C09D 7/63, C08K 5/00, C08K 5/56, C08K 5/3445, C08K 3/015, C08K 3/08, B32B 7/12

(54) **PROTECTIVE COVER, AND ELECTRONIC DEVICE COMPRISING SAME**

(30) Priority: 31.07.2020 KR 20200096374
(71) Applicant: Samsung Electronics Co., Ltd., Gyeonggi-do 16677 (KR)
(72) Inventor: KOO, Bonkwan, Suwon-si, Gyeonggi-do 16677 (KR); LIM, Leetaek, Suwon-si, Gyeonggi-do 16677 (KR); CHUN, Hongmoon, Suwon-si, Gyeonggi-do 16677 (KR)
(74) Representative: HGF
(86) International application number: PCT/KR2021/007549
(87) International publication number: WO 2022/025422

(57) **Abstract**

According to various embodiments, the protective cover may comprise: a base layer; an inner cover layer which is disposed on one side of the base layer and at least partially comes into contact with an electronic device; and an outer cover layer which is disposed on the other side of the base layer and forms at least a part of the exterior, the outer cover layer comprising a backer layer, a coating layer laminated on the backer layer, and a functional layer stacked on the coating layer and having an antibacterial function. Various other embodiments may be included.

## Description

### [Technical Field]

Various embodiments of the disclosure relate to a protective cover and an electronic device including the same.

### [Background Art]

An electronic device such as an expensive smart phone may include a separate protective cover mounted to protect an external appearance, to provide an excellent grip feeling, and to improve an aesthetic appearance. Such a protective cover may be generally made of a high-quality material, and be detachably mounted to protect at least a portion of the electronic device. Recently, it is a trend to be developed for the electronic device to have various additional functions in addition to a function of protecting an external appearance thereof.

### [Disclosure of Invention]

### [Technical Problem]

In addition to a basic function of protecting an external appearance of the electronic device, an outer cover layer including various functions such as antifouling, moisture proof, chemical resistance, abrasion resistance, gloss control, or scratch prevention for minimizing contamination by external foreign substances may be applied to a protective cover detachably mounted in the electronic device. In particular, the outer cover layer may include a printed layer and/or an outer layer disposed in a backer layer, and the above-described corresponding functions may be applied to the printed layer or the outer layer.

As an antibacterial layer including an antibacterial material is additionally applied to the protective cover, the protective cover may help to be free from an infection problem of social diseases that have recently become an issue. Such an antibacterial layer may be formed, for example, by mixing an antibacterial agent with an injection material (PC, silicone, TPU, or fluorine-based rubber).

However, in this method, in the case that a paint coating film for color or surface protection is applied to an injection surface so as to protect against physical and chemical external factors such as dust contamination, abrasion resistance, stickiness of a rubber material, and UV discoloration, an antibacterial function may be reduced due to surface coating.

Various embodiments of the disclosure provide a protective cover and an electronic device including the same.

According to various embodiments, the disclosure provides a protective cover to which an improved antibacterial function is applied, a protective cover including the same, and an electronic device including the same.

According to various embodiments, the disclosure provides a protective cover capable of helping to secure visibility, including a smart function (a notification function through a part of the protective cover), and an electronic device including the same.

### [Solution to Problem]

According to various embodiments, an protective cover may include a base layer; an inner cover layer disposed at one surface of the base layer and at least partially in contact with an electronic device; and an outer cover layer disposed at the other surface of the base layer and configured to form at least a portion of an external appearance, wherein the outer cover layer may include a backer layer; a coating layer laminated on the backer layer; and a functional layer stacked on the coating layer and having an antibacterial function.

According to various embodiments, an electronic device may include a housing; and a protective cover detachably disposed in the electronic device so as to enclose at least a portion of the housing, wherein the protective cover may include a base layer; an inner cover layer disposed at one surface of the base layer and at least partially in contact with the electronic device; and an outer cover layer disposed at the other surface of the base layer and configured to form at least a portion of an external appearance, wherein the outer cover layer may include a backer layer; a coating layer laminated on the backer layer; and a functional layer stacked on the coating layer and having an antibacterial function.

According to various embodiments, a method of producing a protective cover may include forming a coating layer at the backer layer, forming a functional layer at the coating layer, and laminating the backer layer in which the coating layer and the functional layer are formed with an inner cover layer, wherein forming the functional layer may include printing on the coating layer through an antifouling liquid and an antifouling agent including an antibacterial agent mixed in a designated ratio in the antifouling liquid, and a mixing amount of the antimicrobial agent may include 0.07% by weight to 0.15% by weight relative to a weight of the antifouling liquid.

### [Advantageous Effects of Invention]

According to an exemplary embodiment of the disclosure, before mixing with an antifouling agent, by forming an antibacterial solution by mixing and stirring a solvent (e.g., dimethylformamide (DMF) and an antibacterial agent (e.g., antibacterial powder)), and by forming a functional layer by mixing the formed antibacterial solution with the antimicrobial agent, a stirring time can be reduced compared to a time in which the antibacterial agent is directly injected into the antifouling agent, and because the functional layer is formed directly on an outer surface of the protective cover, the activity of surface fungi and/or viruses can be effectively inhibited.

Further, various effects directly or indirectly identified through this document can be provided.

### [Brief Description of Drawings]

In connection with the description of the drawings, the same or similar reference numerals may be used for the same or similar components.
FIG. 1A is an exploded perspective view illustrating a protective cover and an electronic device mounted thereon according to various embodiments of the disclosure.
FIG. 1B is a perspective view illustrating a protective cover on which an electronic device is mounted according to various embodiments of the disclosure.
FIG. 2 is a cross-sectional view illustrating a protective cover taken along line 2-2 of FIG. 1B according to various embodiments of the disclosure.
FIGS. 3A and 3B are front and rear perspective views illustrating a protective cover on which an electronic device is mounted according to various embodiments of the disclosure.
FIG. 4A is a partial cross-sectional view illustrating a protective cover taken along line 4a-4a of FIG. 1A according to various embodiments of the disclosure.
FIG. 4B is a partial cross-sectional view illustrating a protective cover taken along line 4b-4b of FIG. 1A according to various embodiments of the disclosure.
FIG. 5 is a perspective view illustrating a protective cover on which an electronic device is mounted according to various embodiments of the disclosure.
FIG. 6A is an exploded perspective view illustrating a protective cover and an electronic device mounted thereon according to various embodiments of the disclosure.
FIG. 6B is a rear perspective view illustrating a protective cover according to various embodiments of the disclosure.
FIG. 7 is a flowchart for producing a protective cover according to various embodiments of the disclosure.

### [Mode for the Invention]

Hereinafter, various embodiments of this document will be described with reference to the accompanying drawings. However, this is not intended to limit technology described in this document to specific embodiments, and it should be understood to include various modifications, equivalents, and/or alternatives of the embodiments of this document. In connection with the description of the drawings, similar reference numerals may be used for similar components.

An electronic device according to various embodiments of this document may include at least one of, for example, a smartphone, tablet personal computer, mobile phone, video phone, e-book reader, desktop personal computer (PC), laptop personal computer (PC), netbook computer, workstation, server, personal digital assistant (PDA), portable multimedia player (PMP), MP3 player, mobile medical device, camera, or wearable device. According to various embodiments, the wearable device may include at least one of an accessory type (e.g., watch, ring, bracelet, anklet, necklace, glasses, contact lens, or head-mounted-device (HMD)), a fabric or clothing integrated type (e.g., electronic apparel), body attachable type (e.g., skin pad or tattoo), or bioimplantable type (e.g., implantable circuit).

In some embodiments, the electronic device may be a home appliance. The home appliance may include at least one of, for example, a television, digital video disk (DVD) player, audio device, refrigerator, air conditioner, vacuum cleaner, oven, microwave oven, washing machine, air purifier, set-top box, home automation control panel, security control panel, TV box (e.g., Samsung HomeSync^{™}, Apple TV^{™}, or Google TV^{™}), game console (e.g., Xbox^{™}, PlayStation^{™}), electronic dictionary, electronic key, camcorder, or electronic picture frame.

In another embodiment, the electronic device may include at least one of various medical devices (e.g., various portable medical measuring devices (e.g., blood glucose monitor, heart rate monitor, blood pressure monitor, or body temperature monitor), magnetic resonance angiography (MRA), magnetic resonance imaging (MRI), computed tomography (CT), imager, or ultrasound machine), navigation device, global navigation satellite system (GNSS), event data recorder (EDR), flight data recorder (FDR), automotive infotainment device, marine electronic equipment (e.g., marine navigation system, and gyro compass), avionics, security device, vehicle head unit, industrial or domestic robot, automatic teller's machine (ATM) in a financial institution, point of sales (POS) in a store, or internet of things (e.g., light bulb, various sensors, electricity or gas meter, sprinkler device, smoke alarm, thermostat, street light, toaster, exercise equipment, hot water tank, heater, and boiler).

According to some embodiments, the electronic device may include at least one of a piece of furniture or a building/structure, electronic board, electronic signature receiving device, projector, or various measuring devices (e.g., water, electricity, gas, or radio wave measuring device). In various embodiments, the electronic device may be a combination of one or more of the above-described various devices. An electronic device according to an embodiment may be a flexible electronic device. Further, the electronic device according to the embodiment of this document is not limited to the above-described devices, and may include a new electronic device according to technological development.

Hereinafter, an electronic device according to various embodiments will be described with reference to the accompanying drawings. In this document, the term user may refer to a person who uses an electronic device or a device (e.g., artificial intelligence electronic device) using the electronic device.

Further, a protective cover according to exemplary embodiments of the disclosure may be disposed to protect at least a portion of any one of the above-described electronic devices.

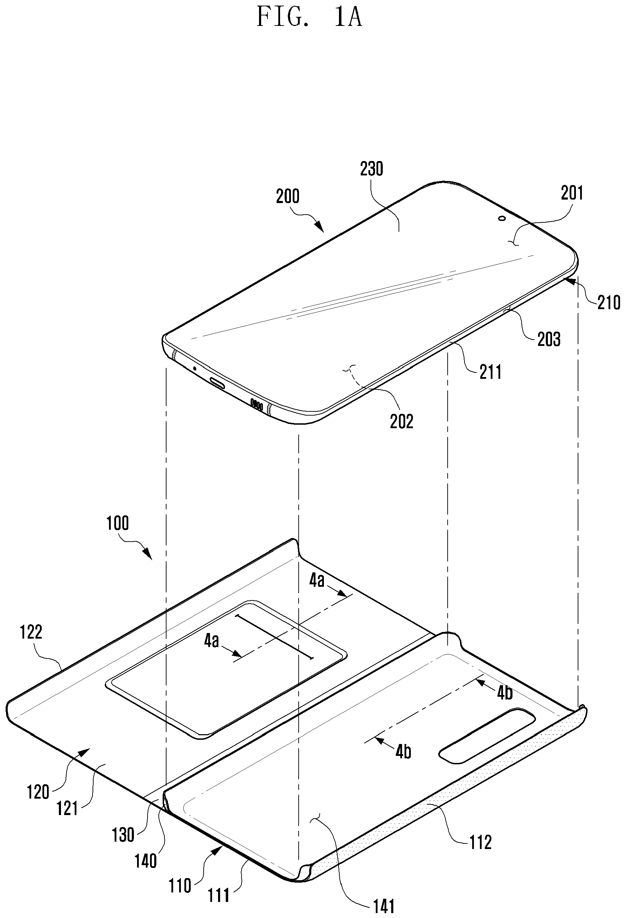

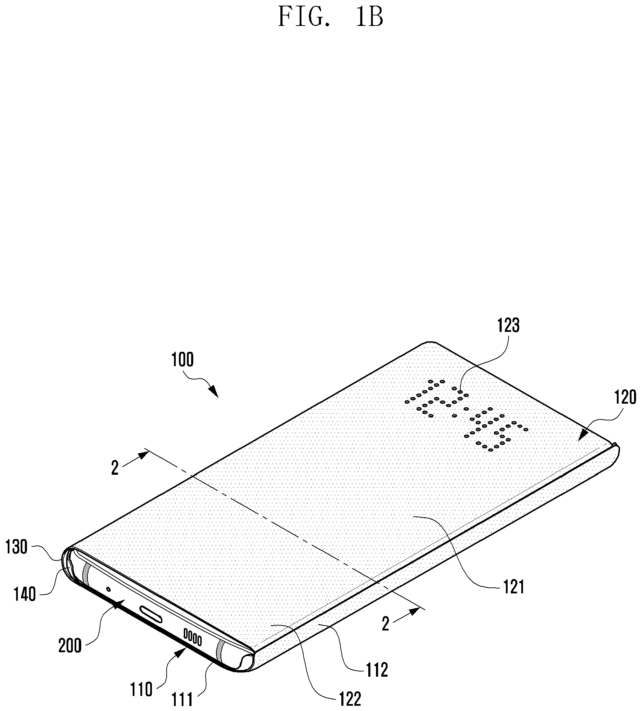

FIG. 1A is an exploded perspective view illustrating a protective cover and an electronic device mounted thereon according to various embodiments of the disclosure. FIG. 1B is a perspective view illustrating a protective cover on which an electronic device is mounted according to various embodiments of the disclosure.

With reference to FIGS. 1A and 1B, a protective cover 100 may include a first cover 110, a second cover 120, and a connection part 130 for integrally connecting the first cover 110 and the second cover 120. According to an embodiment, the first cover 110 and the second cover 120 may be formed in substantially the same size. According to an embodiment, the first cover 110 may include a first plate 111 and a first side part 112 extended in a vertical direction from at least a portion of an edge of the first plate 111. According to an embodiment, the first side part 112 may be formed in a shape corresponding to at least a portion of a side surface 203 of an electronic device 200. According to an embodiment, the second cover 120 may include a second plate 121 and a second side part 122 extended in a vertical direction from at least a portion of an edge of the second plate 121. According to an embodiment, the second side part 122 may also be formed in a shape corresponding to at least a portion of the side surface 203 of the electronic device 200. In some embodiments, the first side part 112 and the second side part 122 may be formed in a curved shape.

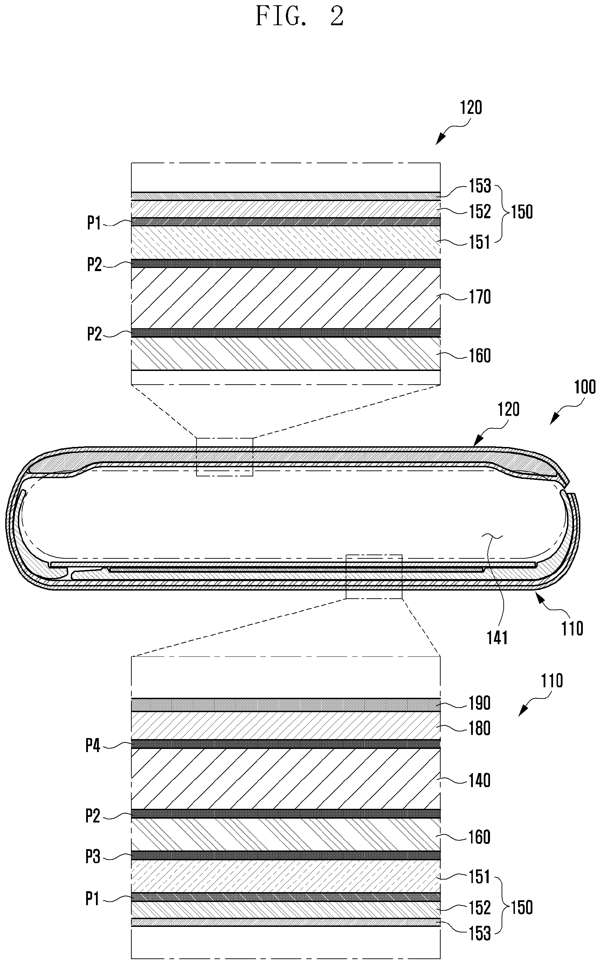

According to various embodiments, the protective cover 100 may include a cradle 140 attached to the first plate 111 of the first cover 110. According to an embodiment, the cradle 140 may include a mounting part 141 that may receive at least a portion of a rear surface 202 and the side surface 203 of the electronic device 200. According to an embodiment, the cradle 140 may be made of a polymer and/or a metal material. For example, the cradle 140 may be made of at least one of a metal material, glass fiber-reinforced plastics (GFRP), carbon fiber-reinforced plastics (CFRP), rubber, silicon, polycarbonate (PC), polycarbonate-acrylonitrile-butadiene-styrene (PC ABS), or polycarbonate fiber glass (PC_FG). According to an embodiment, the cradle 140 may include a cradle inner cover layer (e.g., a cradle inner cover layer 180 of FIG. 2) disposed in the mounting part 141 and for protecting the electronic device 200. According to an embodiment, the cradle inner cover layer 180 may be made of a fabric (e.g., felt).

According to various embodiments, the electronic device 200 may include a housing 210 (e.g., housing structure) including a lateral member 211 including a front surface 201 facing a specified direction, a rear surface 202 facing a direction opposite to that of the front surface 201, and a side surface 203 enclosing a space between the front surface 201 and the rear surface 202. According to an embodiment, the electronic device 200 may include a display 230 disposed to be visible from the outside through substantially the entire area of the front surface 201.

According to various embodiments, the first cover 110 of the protective cover 100 may receive at least a portion of the electronic device 200. According to an embodiment, the electronic device 200 may be fixed in a manner in which it is mounted in the mounting part 141 of the cradle 140 disposed in the first plate 111 of the first cover 110. For example, as the rear surface 202 faces the mounting part 141 of the cradle 140, and at least a portion of the side surface 203 is tightly fitted to the cradle 140, the electronic device 200 may be fixed to the first cover 110. According to an embodiment, in the case that the electronic device 200 is used, the second cover 120 may maintain a first state (a state of FIG. 1A) opened from the first cover 110, and when the electronic device 200 is not used, or for portability of the electronic device 200, the second cover 120 may be folded to overlap the first cover 110, and maintain the second state (a state of FIG. 1B) protecting the display 230. In some embodiments, even in the case that the electronic device 200 is in the second state, at least some functions thereof may be performed through a notification means 123 (e.g., notification member) disposed in the second cover 120. For example, the notification means may provide a specific notification to a user through a control circuit including an LED indicator built inside the second cover 120. According to an embodiment, the control circuit including the notification means 123 may be wirelessly and/or wiredly connected to the electronic device 200 to receive data and power.

FIG. 2 is a cross-sectional view illustrating a protective cover taken along line 2-2 of FIG. 1B according to various embodiments of the disclosure.

With reference to FIG. 2, the protective cover 100 may include a first cover 110 including the cradle 140 for receiving the electronic device 200 and a second cover 120 foldably connected to the first cover 110 through the connection part 130. According to an embodiment, in a state in which the first cover 110 and the second cover 120 are folded, the first side part 112 and the second side part 122 of the protective cover 100 may be disposed to enclose the electronic device 200 in a closed loop shape through a gap-free connection.

According to various embodiments, the second cover 120 may include a base layer 170, an inner cover layer 160 disposed at one surface of the base layer 170, and an outer cover layer 150 disposed at the other surface of the base layer 170 and facing the outside. According to an embodiment, the outer cover layer 150 may be formed as substantially an outer surface of the second cover 120 of the protective cover 100. According to an embodiment, the base layer 170 is a core layer, which provides rigidity to the second cover 120, and may be disposed invisibly from the outside when the outer cover layer 150 and the inner cover layer 160 are laminated. According to an embodiment, the base layer 170 may be made of at least one of a metal material, GFRP, CFRP, rubber, silicon, PC, PC_ABS, or PC_FG. According to an embodiment, the inner cover layer 160 may be made of various materials such as polyurethane (PU), PC, GFRP, CFRP, or glass.

According to various embodiments, the outer cover layer 150 may include a backer layer 151, a coating layer 152 laminated on the backer layer 151, and a functional layer 153 stacked on the coating layer 152, and as an outermost layer forming an outer surface of the protective cover 100. According to an embodiment, the backer layer 151 may be made of a fabric. In some embodiments, the backer layer 151 may be made of at least one of PU or thermoplastic polyurethane (TPU). According to an embodiment, the coating layer 152 (e.g., skin layer) is a printed layer, and may be a decorative layer that determines a color of the protective cover 100, and be attached to the backer layer 151 through the adhesive member P1 (e.g., PU adhesive). According to an embodiment, the functional layer 153 may be formed to provide functions such as antifouling, moisture proof, chemical resistance, abrasion resistance, gloss control, scratch prevention, or antibacterial function of the protective cover 100. For example, in the functional layer 153, a liquid antifouling agent (e.g., antifouling liquid) mixed with an antimicrobial agent may be stacked on the coating layer 152 with a gravure printing method. According to an embodiment, in the gravure printing method, when the functional layer 153 is stacked on the backer layer 151 of a textile material and the coating layer 152 thereon, compared to a spray printing method, a phenomenon such as paint agglomeration may be prevented.

According to various embodiments, the antibacterial agent (e.g., antibacterial powder) may be mixed in a ratio of 0.07 by weight to 0.15% by weight relative to the total antifouling agent. According to an embodiment, the antibacterial agent may be formed in the form of an antibacterial solution in which an antibacterial powder and a solvent (e.g., DMF) are mixed in a ratio of 1:1 and stirred before mixing with the liquid antifouling solution. Therefore, the antifouling agent is formed in a form in which the antibacterial solution stirred with the antifouling solution is mixed, thereby preventing an agglomeration phenomenon of a surface of the protective cover generated while the antibacterial powder is directly injected into the antifouling solution. According to an embodiment, a mixing amount of the antibacterial agent (e.g., antibacterial powder) may include 0.07% by weight to 0.15% by weight relative to a weight of the antifouling liquid. According to an embodiment, a mixing amount of the antimicrobial agent may be determined not to exceed 0.3g per unit area (m2). According to an embodiment, the antibacterial agent (e.g., antibacterial powder) may include at least one of zinc pyrithione, climbazlole, or Cu.

According to various embodiments, the inner cover layer 160 and the outer cover layer 150 may be attached through hot melt P2 with the base layer 170 interposed therebetween. According to an embodiment, the base layer 170 may be disposed invisibly from the outside between the attached inner cover layer 160 and outer cover layer 150. According to an embodiment, the hot melt is a heat-melting adhesive that does not use water or solvent, but uses a thermoplastic resin, is applied and compressed to an adherend in a liquid form at a high temperature, and then cooled and solidified within a few seconds and exhibits an adhesive force; thus, it may be easy to attach the outer cover layer 150, which is a fabric and the inner cover layer 160 made of a PU material. In some embodiments, the protective cover 100 may be cut through a knife mold along an edge after the inner cover layer 160 and the outer cover layer 150 are attached with the base layer 170 interposed therebetween, and an edge coat through polyol (e.g., polytetramethylene ether glycol (PTMG) or polypropilene (PPG)) may be attached to an end portion thereof.

According to various embodiments, in the first cover 110, the outer cover layer 150 and the inner cover layer 160 extended from the second cover 120 may be attached through an adhesive member P3 (e.g., PU adhesive or hot melt) without a separate base layer 170, and the cradle 140 may be attached to the inner cover layer 160. For example, the cradle 140 may be attached to the inner cover layer 160 through hot melt P2 or PU adhesive. According to an embodiment, the cradle 140 may include a cradle inner cover layer 180 attached to the mounting part 141 through an adhesive member P4 (e.g., PU adhesive), and an antibacterial layer 190 including the above-described functional layer 153 may be applied to the cradle inner cover layer 180.

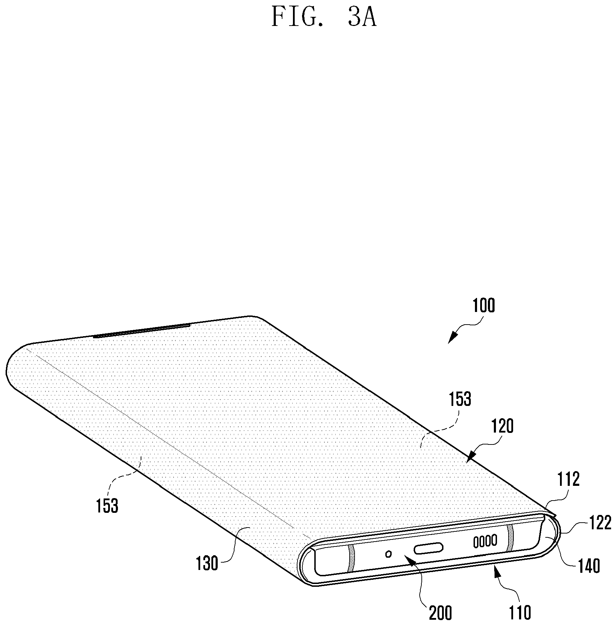

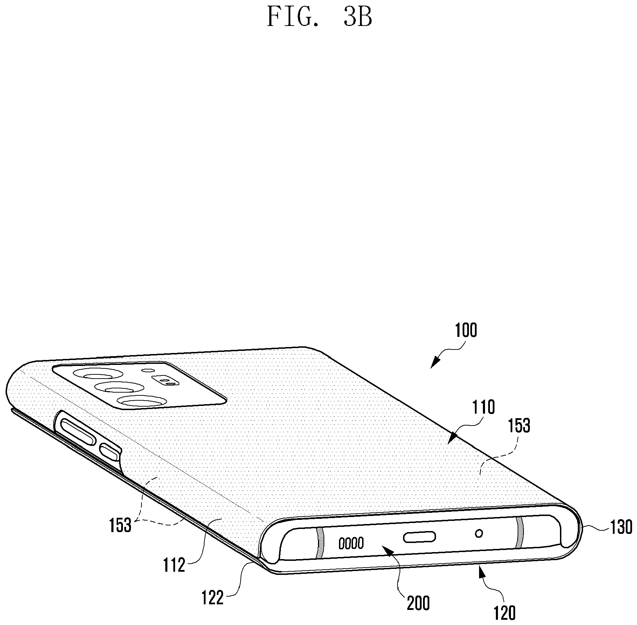

FIGS. 3A and 3B are front and rear perspective views illustrating a protective cover on which an electronic device is mounted according to various embodiments of the disclosure.

With reference to FIGS. 3A and 3B, the protective cover 100 may be configured to have a closed loop shape (shape '□') enclosing the electronic device 200 in a folded state. According to an embodiment, after the electronic device 200 is mounted in the mounting part 141 formed in the cradle 140 of the first cover 110, when the second cover 120 is folded with respect to the first cover 110, the first side part 112 of the first cover 110 and the second side part 122 of the second cover 120 may be disposed to cover the side surface 203 of the electronic device 200 without a gap. Accordingly, the rear surface 202 of the electronic device 200 faces the first plate 111 of the first cover 110, and the front surface 201 of the electronic device 200 faces the second plate 121, and the side surface 203 of the electronic device 200 is disposed to face the connection part 130, the first side part 112, and the second side part 122; thus, the electronic device 200 may be entirely protected by the functional layer 153 of the protective cover 100 substantially including an antibacterial function.

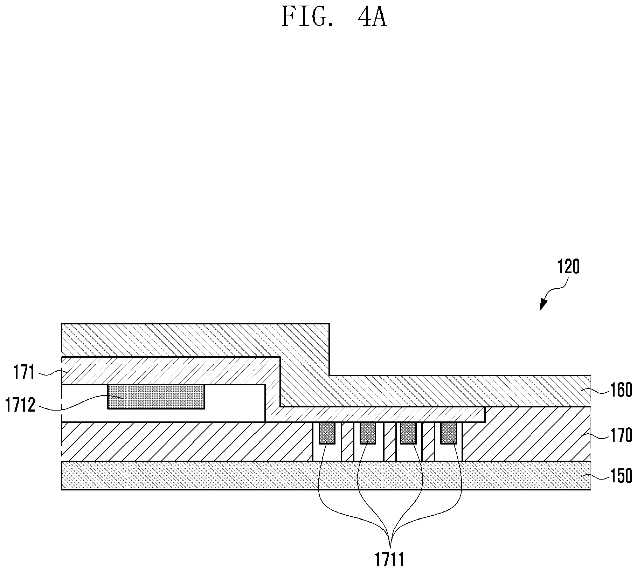

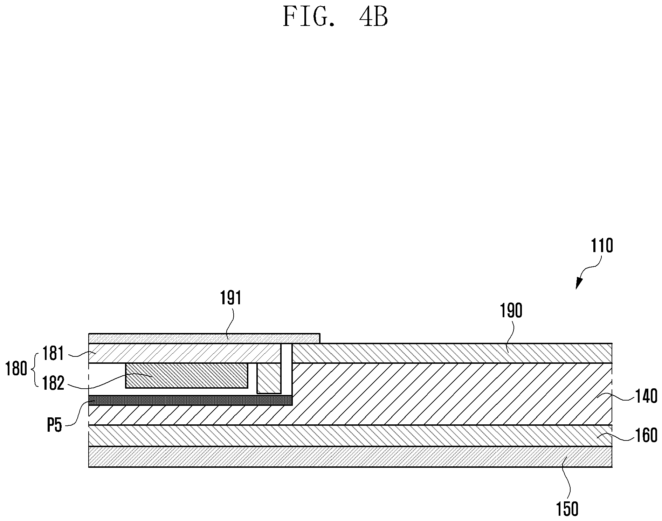

FIG. 4A is a partial cross-sectional view illustrating a protective cover taken along line 4a-4a of FIG. 1A according to various embodiments of the disclosure. FIG. 4B is a partial cross-sectional view illustrating a protective cover taken along line 4b-4b of FIG. 1A according to various embodiments of the disclosure.

With reference to FIGS. 4A and 4B, the protective cover 100 may include a circuit assembly for receiving power and data from the electronic device 200 mounted in the first cover 110 and providing notification information to the user through the notification means 123 disposed in the second cover 120. According to an embodiment, the circuit assembly may include a substrate assembly 180 including a PCB 181 disposed in the first cover 110 and a connector 182 disposed in the PCB 181, a flexible circuit 171 electrically connected to the substrate assembly 180 and connected to the second cover 120 through the connection part 130, and a control circuit 1712 and a notification means 1711 disposed in the flexible circuit 171 in the second cover 120. In some embodiments, the control circuit 1712 may be disposed in the substrate assembly 180. In some embodiments, the connector 182 of the substrate assembly 180 may include a coil member disposed to receive wireless power and data from the electronic device 200 in a designated manner (e.g., NFC method). According to an embodiment, the notification means 1711 may be disposed in a manner in which it is embedded in the base layer 170, and provide notification information to the outside through the outer cover layer 150. In some embodiments, a rigid PCB may be disposed in the first cover 110 and the second cover 120, and both ends of the flexible substrate 171 connected through the connection part 130 may be configured to be electrically connected to the PCB. According to an embodiment, the flexible substrate 171 may be attached to the cradle 140 in the first cover 110 through an adhesive member P5 and be finished through label paper 191. In some embodiments, the flexible circuit 171 disposed on the second cover 120 may include a touch sensor.

According to various embodiments, the protective cover 100 may receive data by a wireless (e.g., Bluetooth or NFC communication) or wired (e.g., direct contact) means from the electronic device 200 even in a folded state, and provide data (e.g., notification information and/or state information of the electronic device 200) received through the notification means 1711 disposed in the second cover 120 to the user. In some embodiments, the notification means may be disposed in the first cover 110 or in both the first cover 110 and the second cover 120.

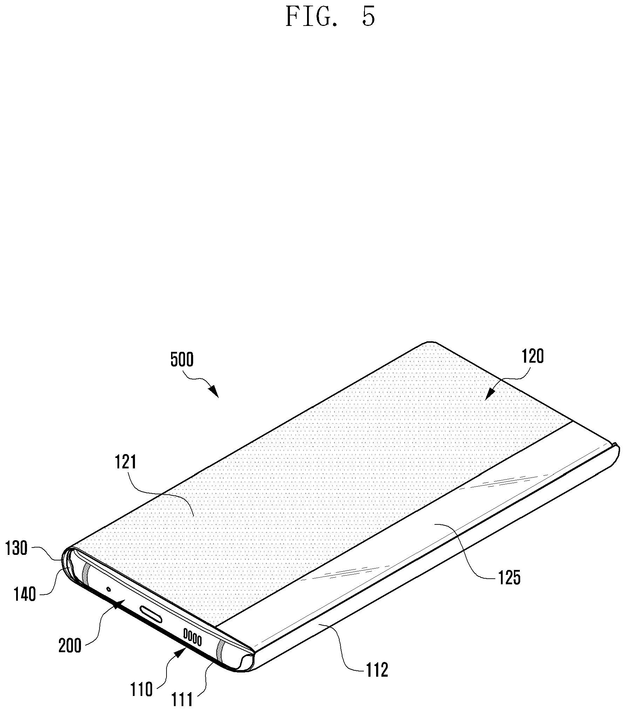

FIG. 5 is a perspective view illustrating a protective cover on which an electronic device is mounted according to various embodiments of the disclosure.

In describing a protective cover 500 of FIG. 5, the same reference numerals are assigned to the components substantially the same as those of the protective cover 100 of FIGS. 1A and 1B, and a detailed description thereof may be omitted.

With reference to FIG. 5, the electronic device 200 may include a window 125 made of a transparent or translucent material disposed in at least a partial area of the second cover 120. According to an embodiment, the window 125 may be made of a polymer and/or glass. According to an embodiment, by disposing the display (e.g., the display 230 of FIG. 1A) of the electronic device 200 to be visible through the window 125 of the second cover 120 even in a state in which the second cover 120 is folded on the first cover 110, the protective cover 500 may provide notification information and/or state information of the electronic device 500 to the user.

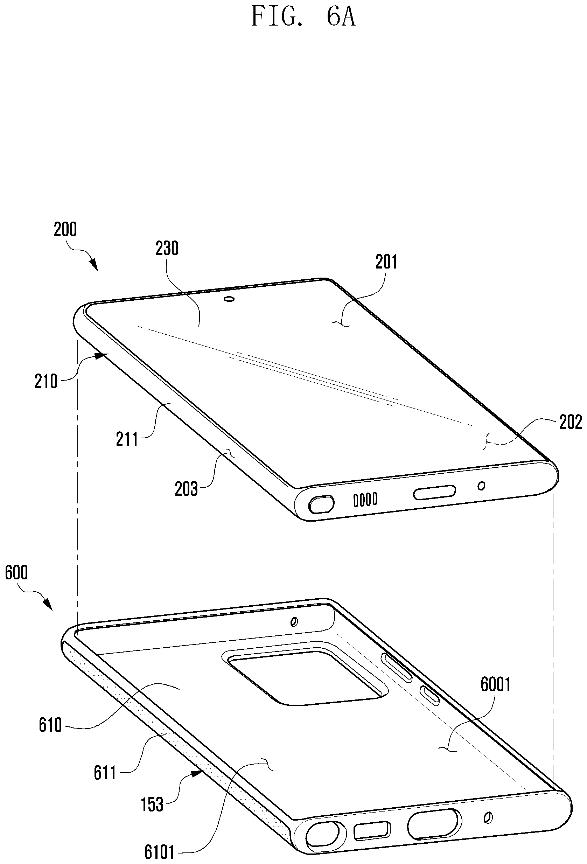

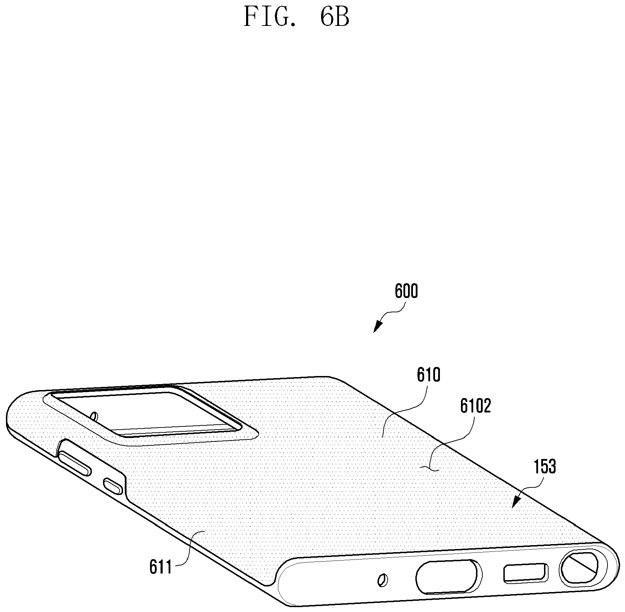

FIG. 6A is an exploded perspective view illustrating a protective cover and an electronic device mounted thereon according to various embodiments of the disclosure. FIG. 6B is a rear perspective view illustrating a protective cover according to various embodiments of the disclosure.

With reference to FIGS. 6A and 6B, a protective cover 600 may be formed in a shape capable of protecting only at least a portion of the rear surface 202 or the side surface 203 of the electronic device 200, unlike FIGS. 1A and 1B. According to an embodiment, the protective cover 600 may include a plate 610 and a side part 611 extended vertically along an edge of the plate 610. According to an embodiment, the protective cover 600 may form a mounting part 6001 capable of receiving at least a portion of the electronic device 200 through the plate 610 and the side part 611.

According to various embodiments, the protective cover 600 may include an inner surface 6101 facing the electronic device 200 and an outer surface 6102 facing in a direction opposite to that of the inner surface 6101. According to an embodiment, the protective cover 600 may include a functional layer 153 formed on the outer surface 6102. According to an embodiment, the functional layer 153 may include an antifouling agent including an antibacterial agent, as described above, and be applied to a coating layer (e.g., the coating layer 152 of FIG. 2) formed on a polymer and/or metal base material by a gravure printing and/or spraying method.

The protective cover 600 according to exemplary embodiments of the disclosure is applied with an antifouling agent including an antibacterial agent formed in the outermost layer, thereby helping to improve an antibacterial performance against external viruses.

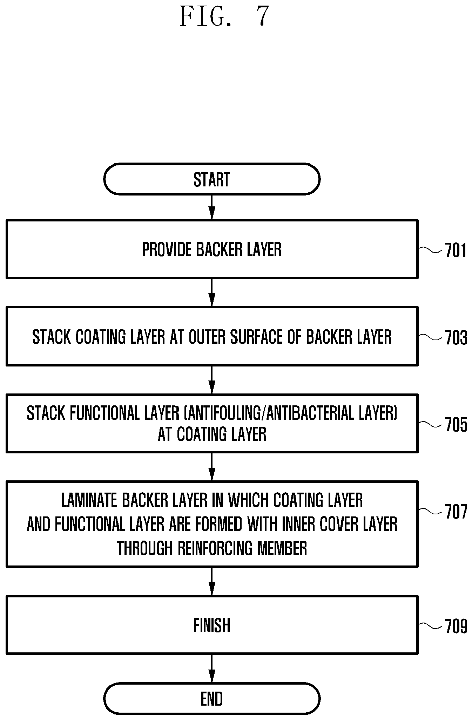

FIG. 7 is a flowchart for producing a protective cover according to various embodiments of the disclosure.

With reference to FIGS. 7 and 2, in operation 701, a backer layer 151 may be provided. According to an embodiment, the backer layer 151 may be made of a fabric or a polymer material. According to an embodiment, the backer layer 151 may include PU and/or TPU.

In operation 703, the coating layer 152 may be laminated on the backer layer 151. According to an embodiment, the coating layer 152 may be laminated through, for example, a PU adhesive. According to an embodiment, the coating layer 152 may form a color and/or texture of the protective cover 100.

In operation 705, a functional layer 153 may be stacked on the coating layer 152. For example, the functional layer 153 may include an antifouling agent including an antibacterial agent. According to an embodiment, the antibacterial agent may include, for example, an antibacterial solution in which a dimethylformamide (DMF) solvent and an antibacterial powder (e.g., at least one of zinc pyrithione, climbazlole, or Cu) are mixed in a 1:1 ratio and then stirred. According to an embodiment, the antifouling agent may be formed by secondly stirring the antibacterial solution in the antifouling solution (32FM:32M). According to an embodiment, the antibacterial agent may be mixed in a ratio of 0.07 by weight to 0.15% by weight relative to the total antifouling agent. According to an embodiment, the antifouling agent may be stacked on the coating layer through gravure printing. According to an embodiment, a mixing amount of the antimicrobial agent may not exceed 0.3g per unit area (m2).

In operation 707, as the outer cover layer 150, the backer layer 151 in which the coating layer 152 and the functional layer 153 are formed may be laminated with the inner cover layer 160 through a reinforcing member as the base layer 170. According to an embodiment, the outer cover layer 150 in which the coating layer 152 and the functional layer 153 are sequentially stacked on the backer layer 151 and the inner cover layer 160 may be laminated with the reinforcing member 170 therebetween or may be laminated without a reinforcing member. In this case, the outer cover layer 150 and the inner cover layer 160 may be attached through hot melt.

In operation 709, the outer cover layer 150 and the outer cover layer 160 attached through hot melt may be cut into an appropriate shape, and a finishing process in which edge coat is formed along the edge may be performed.

According to various embodiments, the protective cover (e.g., the protective cover 100 of FIG. 2) may include a base layer (e.g., the base layer 170 of FIG. 2); an inner cover layer (e.g., the inner cover layer 160 of FIG. 2) disposed at one surface of the base layer and at least partially in contact with an electronic device (e.g., the electronic device 200 of FIG. 1A); and an outer cover layer (e.g., the outer cover layer 150 of FIG. 2) disposed at the other surface of the base layer and configured to form at least a portion of an external appearance, wherein the outer cover layer may include a backer layer (e.g., the backer layer 151 of FIG. 2); a coating layer (e.g., the coating layer 152 of FIG. 2) laminated on the backer layer; and a functional layer (e.g., the functional layer 153 of FIG. 2) stacked on the coating layer and having an antibacterial function.

According to various embodiments, the functional layer may be printed on the coating layer through an antifouling solution and an antifouling agent including an antibacterial agent mixed in a designated ratio in the antifouling solution.

According to various embodiments, a mixing amount of the antimicrobial agent may include 0.07% by weight to 0.15% by weight relative to a weight of the antifouling solution.

According to various embodiments, a mixing amount of the antimicrobial agent may be determined not to exceed 0.3g per unit area (m2).

According to various embodiments, the antibacterial agent may include at least one of zinc pyrithione, crimbazole, or Cu.

According to various embodiments, the antibacterial agent may be formed in a liquid form in which an antibacterial material in a powder form is stirred with a liquid solvent before mixing with the antifouling liquid.

According to various embodiments, the backer layer may be made of at least one of a fabric, PU, or TPU.

According to various embodiments, the coating layer may provide a texture and/or color of the protective cover.

According to various embodiments, the inner cover layer and the outer cover layer may be attached to the base layer through hot melt.

According to various embodiments, the protective cover may include a first cover; an extension part extended from the first cover and formed to be bendable; and a second cover extended from the extension part, wherein in a folded state, a space for enclosing the electronic device may be provided through the first cover, the extension part, and the second cover.

According to various embodiments, the outer cover layer may be formed at an outer surface of the first cover, the extension part, and the second cover.

According to various embodiments, the first cover may include a cradle disposed to mount at least a portion of the electronic device, and in the folded state, the second cover may be disposed to cover the display of the electronic device.

According to various embodiments, the protective cover may further include an electronic notification means disposed to be visually identified from the outside through the second cover in the folded state.

According to various embodiments, the electronic notification means may be disposed through a control circuit so as to receive power and data from the electronic device.

According to various embodiments, the electronic device may include a display, and the space may form a closed space so as to enclose the electronic device through the first cover, the connection part, and the second cover.

According to various embodiments, an electronic device may include a housing; and a protective cover detachably disposed on the electronic device so as to enclose at least a portion of the housing, wherein the protective cover may include a base layer; an inner cover layer disposed at one surface of the base layer and at least partially in contact with the electronic device; and an outer cover layer disposed at the other surface of the base layer and configured to form at least a portion of an external appearance, wherein the outer cover layer may include a backer layer; a coating layer laminated on the backer layer; and a functional layer stacked on the coating layer and having an antibacterial function.

According to various embodiments, the functional layer may be printed on the coating layer through an antifouling liquid and an antifouling agent including an antibacterial agent mixed in a designated ratio in the antifouling liquid.

According to various embodiments, a mixing amount of the antimicrobial agent may include 0.07% by weight to 0.15% by weight relative to a weight of the antifouling solution.

According to various embodiments, the mixing amount of the antimicrobial agent may be determined not to exceed 0.3g per unit area (m2).

According to various embodiments, a method of producing a protective cover may include forming a coating layer on the backer layer, forming a functional layer on the coating layer, and laminating the backer layer in which the coating layer and the functional layer are formed with an inner cover layer, wherein forming the functional layer may include printing on the coating layer through an antifouling liquid and an antifouling agent including an antibacterial agent mixed in a designated ratio in the antifouling liquid, and a mixing amount of the antimicrobial agent may include 0.07% by weight to 0.15% by weight relative to a weight of the antifouling liquid.

Embodiments of the disclosure disclosed in this specification and drawings only present specific examples to easily describe the technical contents according to embodiments of the disclosure and to help understanding of embodiments of the disclosure, and they are not intended to limit the scope of embodiments of the disclosure. Therefore, in addition to the embodiments disclosed herein, all changes or modifications derived based on the technical idea of various embodiments of the disclosure should be construed as being included in the scope of various embodiments of the disclosure.

## Claims

1. An protective cover, comprising:
a base layer;
an inner cover layer disposed at one surface of the base layer and at least partially in contact with an electronic device; and
an outer cover layer disposed at the other surface of the base layer and configured to form at least a portion of an external appearance,
wherein the outer cover layer comprises:
a backer layer;
a coating layer laminated on the backer layer; and
a functional layer stacked on the coating layer and having an
antibacterial function.

2. The protective cover of claim 1, wherein the functional layer is printed on the coating layer through an antifouling solution and an antifouling agent including an antibacterial agent mixed in a designated ratio in the antifouling solution.

3. The protective cover of claim 2, wherein a mixing amount of the antimicrobial agent comprises 0.07% by weight to 0.15% by weight relative to a weight of the antifouling solution.

4. The protective cover of claim 2, wherein a mixing amount of the antimicrobial agent is determined not to exceed 0.3g per unit area (m2).

5. The protective cover of claim 2, wherein the antibacterial agent comprises at least one of zinc pyrithione, crimbazole, or Cu.

6. The protective cover of claim 2, wherein the antibacterial agent is formed in a liquid form in which an antibacterial material in a powder form is stirred with a liquid solvent before mixing with the antifouling liquid.

7. The protective cover of claim 1, wherein the backer layer is made of at least one of a fabric, polyurethane (PU), or thermoplastic polyurethane (TPU).

8. The protective cover of claim 1, wherein the coating layer is configured to provide a texture and/or color of the protective cover.

9. The protective cover of claim 1, wherein the inner cover layer and the outer cover layer are attached to the base layer through hot melt.

10. The protective cover of claim 1, wherein the protective cover comprises:
a first cover;
an extension part extended from the first cover and formed to be bendable; and
a second cover extended from the extension part,
wherein in a folded state, a space configured to enclose the electronic device is provided through the first cover, the extension part, and the second cover.

11. The protective cover of claim 1, wherein the outer cover layer is formed at an outer surface of the first cover, the extension part, and the second cover.

12. The protective cover of claim 11, wherein the first cover comprises a cradle disposed to mount at least a portion of the electronic device, and
in a folded state, the second cover is disposed to cover the display of the electronic device.

13. An electronic device, comprising:
a housing; and
a protective cover detachably disposed on the electronic device so as to enclose at least a portion of the housing,
wherein the protective cover comprises:
a base layer;
an inner cover layer disposed at one surface of the base layer and at least partially in contact with the electronic device; and
an outer cover layer disposed at the other surface of the base layer and configured to form at least a portion of an external appearance,
wherein the outer cover layer comprises:
a backer layer;
a coating layer laminated on the backer layer; and
a functional layer stacked on the coating layer and having an
antibacterial function.

14. The electronic device of claim 13, wherein the functional layer is printed on the coating layer through an antifouling liquid and an antifouling agent including an antibacterial agent mixed in a designated ratio in the antifouling liquid, and
a mixing amount of the antimicrobial agent comprises 0.07% by weight to 0.15% by weight relative to a weight of the antifouling solution.

15. The electronic device of claim 14, wherein the mixing amount of the antimicrobial agent is determined not to exceed 0.3g per unit area (m2).
